# EUROPEAN PATENT APPLICATION

(11) **EP 4 467 266 A1**
(43) Date of publication of application: **27.11.2024**
(21) Application number: 24166059.6
(22) Date of filing: 25.03.2024
(51) Int. Cl.: B22F 10/28, B22F 10/80, B22F 12/45, B33Y 10/00, B33Y 50/00, G06F 30/20

(54) **PREDICTIVE MODEL FOR MULTI-LASER POWDER BED FUSION ADDITIVE MANUFACTURING**

(30) Priority: 25.05.2023 US 202318201786
(71) Applicant: RTX Corporation, Farmington, CT 06032 (US)
(72) Inventor: Masoud, Anahid, Galena, OH, 43021 (US); Lynch, Matthew E., Canton, CT, 06019 (US); El-Wardany, Tahany, 06066, Vernon, CT (US)
(74) Representative: Schmitt-Nilson Schraud Waibel Wohlfrom Patentanwälte Partnerschaft mbB

(57) **Abstract**

An analysis tool for multi-laser additive manufacturing including a build file module; a preprocessor in operative communication with the build file module; a prime module in operative communication with the preprocessor; and a defect code module in operative communication with the prime module.

## Description

The present disclosure relates generally to additive manufacturing, and more specifically to an analysis tool and process for predicting flaw formation in multi-laser additive manufacturing operations.

Additive manufacturing is a process that is utilized to create components by applying sequential material layers, with each layer being applied to the previous material layer. As a result of the iterative, trial and error, construction process, multiple different parameters affect whether an end product created using the additive manufacturing process includes flaws or is within acceptable tolerances of a given part. Typically, components created using an additive manufacturing process are designed iteratively, by adjusting one or more parameters each iteration and examining the results to determine if the results have the required quality.

Multi-laser additive manufacturing (AM) technology is a promising process to increase allowable part size and rate of production. However, multiple lasers in additive systems could add further complications and challenges to material quality. There is no known tool to predict defect formation and dependency to process parameters for multi-laser applications. It is known how to predict defect type, density and location at the part level under a single laser operation. An example can be the teaching in US patent 10,252,512 which is incorporated by reference herein.

What is needed is comprehensive analysis tool to study the effect of process parameters on formation of different types of defects in components produced by multi-laser powder bed fusion additive manufacturing (PBFAM).

In accordance with the present disclosure, there is provided an analysis tool for multi-laser additive manufacturing comprising a build file module; a preprocessor in operative communication with the build file module; a prime module in operative communication with the preprocessor; and a defect code module in operative communication with the prime module.

Particular embodiments may further include at least one, or a plurality of, the following optional features. Each of these optional features may be added separate from other optional features, or in combination with other optional features.

A further embodiment of any of the foregoing embodiments may additionally and/or alternatively include the build file module includes a variety of build file inputs that relate to build files of an additive manufacturing machine and a part.

A further embodiment of any of the foregoing embodiments may additionally and/or alternatively include build file inputs are selected from the group consisting of build conditions, primary process parameters, scan region for each laser, and a specimen STL or mesh file.

A further embodiment of any of the foregoing embodiments may additionally and/or alternatively include the build conditions are selected from the group consisting of laser overlap, stripe width, angle and overlap, layer thickness, interlayer dwell time and powder particle size.

A further embodiment of any of the foregoing embodiments may additionally and/or alternatively include the primary process parameters are selected from the group consisting of scan speed, laser power and spot size for each laser.

A further embodiment of any of the foregoing embodiments may additionally and/or alternatively include the pre-processor includes code to extract process parameters and laser regions from a scan strategy build file in the build file module, and seamlessly pass this information to the defect code module for further defect analysis.

A further embodiment of any of the foregoing embodiments may additionally and/or alternatively include the prime module is configured to determine a location, a size and a shape of stripes from input parameters which are validated against an actual multi-laser build file input.

A further embodiment of any of the foregoing embodiments may additionally and/or alternatively include the defect code module is configured to produce outputs selected from the group consisting of a temperature map representing local temperature increase as a result of prior layers, stripes and hatching, laser thermal interaction; two dimension and three dimension defect maps representing a lack of fusion and keyhole porosities; and a time-location map representing the location of each laser during a build.

A further embodiment of any of the foregoing embodiments may additionally and/or alternatively include the defect code module is configured to locate lasers at any specific time during a build.

A further embodiment of any of the foregoing embodiments may additionally and/or alternatively include the defect code module is configured to generate a time-location map for lasers using inputs including scan speed, hatch distance and stripe angle.

A further embodiment of any of the foregoing embodiments may additionally and/or alternatively include the defect code module is configured to employ a defect code to predict the location, size and shape of the stripes from input parameters, such as bounding boxes for each laser, a stripe width, angle and overlap, and a height of layer.

A further embodiment of any of the foregoing embodiments may additionally and/or alternatively include the analysis tool is configured to produce a preliminary quality metric as a function of a ratio between a number of points associated with defects and total number of points.

A further embodiment of any of the foregoing embodiments may additionally and/or alternatively include the analysis tool is configured to employ a time search algorithm to locate lasers at any time.

In accordance with the present disclosure, there is provided a process for employing an analysis tool for multi-laser additive manufacturing comprising configuring a build file module; operatively connecting a preprocessor with the build file module; operatively connecting a prime module with the preprocessor; and operatively connecting a defect code module with the prime module.

Particular embodiments may further include at least one, or a plurality of, the following optional features. Each of these optional features may be added separate from other optional features, or in combination with other optional features.

A further embodiment of any of the foregoing embodiments may additionally and/or alternatively include the further comprising configuring the prime module to determine a location, a size and a shape of stripes from input parameters which are validated against an actual multi-laser build file input.

A further embodiment of any of the foregoing embodiments may additionally and/or alternatively include the process further comprising configuring the defect code module to produce outputs selected from the group consisting of a temperature map representing local temperature increase as a result of prior layers, stripes and hatching, laser thermal interaction; two dimension and three dimension defect maps representing a lack of fusion and keyhole porosities; and a time-location map representing the location of each laser during a build.

A further embodiment of any of the foregoing embodiments may additionally and/or alternatively include the process further comprising configuring the defect code module to locate lasers at any specific time during a build.

A further embodiment of any of the foregoing embodiments may additionally and/or alternatively include the process further comprising configuring the defect code module to generate a time-location map for lasers using inputs including scan speed, hatch distance and stripe angle.

A further embodiment of any of the foregoing embodiments may additionally and/or alternatively include the process further comprising configuring the defect code module to employ a defect code to predict the location, size and shape of the stripes from input parameters, such as bounding boxes for each laser, a stripe width, angle and overlap, and a height of layer.

A further embodiment of any of the foregoing embodiments may additionally and/or alternatively include the process further comprising configuring the analysis tool to produce a preliminary quality metric as a function of a ratio between a number of points associated with defects and total number of points.

Other details of the analysis tool are set forth in the following detailed description and the accompanying drawings wherein like reference numerals depict like elements.
Fig. 1 is a schematic representation of an exemplary additive manufacturing machine.
Fig. 2 is a schematic representation of a part created by a single laser along side the part created by multiple lasers.
Fig. 3 is a schematic representation of a temperature map for multi-laser applications.
Fig. 4 is a schematic representation of a defect map for multi-laser applications.
Fig. 5 is an analysis tool diagram.
Fig. 6 is a schematic diagram of the process with the analysis tool.
Fig. 7 is a schematic diagram of an exemplary global simulation domain.

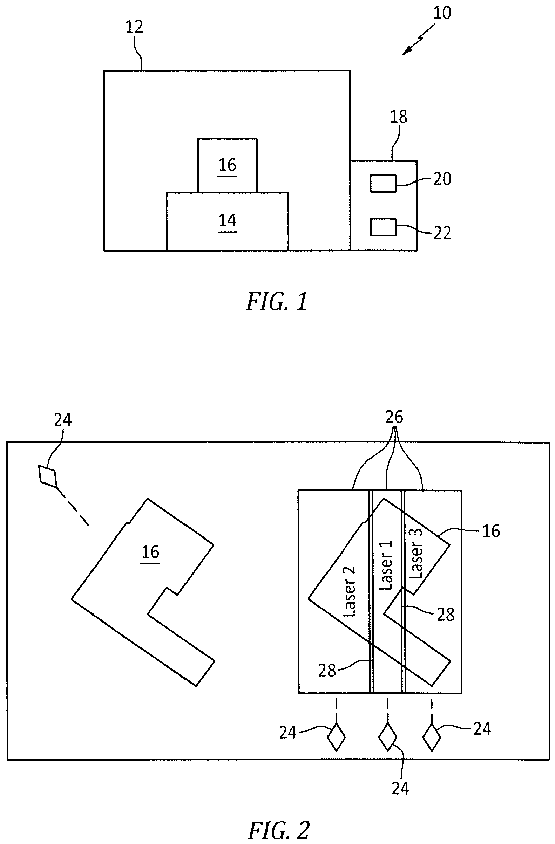

Referring now to Fig. 1, schematically illustrates an additive manufacturing machine 10, such as a laser powder bed fusion additive manufacturing (PBFAM) machine. In alternate examples, the powder bed fusion machine can be an electron beam powder bed fusion machine. The exemplary additive manufacturing machine 10 includes a manufacturing chamber 12 with a platform 14 upon which a part 16 (alternatively referred to as a work piece) is additively manufactured. A controller 18 is connected to the chamber 12 and controls the additive manufacturing process according to any known additive manufacturing control system.

Included within the controller 18 is a processor 20 that receives and interprets input operations to define a sequence of the additive manufacturing. As utilized herein "operations" refers to instructions specifying operational conditions for one or more step in an additive manufacturing process. The controller 18 can, in some examples, include user interface devices such as a keyboard and view screen. In alternative examples, the controller 18 can include a wireless or wired communication apparatus for communicating with a remote user input device such as a PC.

Also included in the controller 18 is a memory 22. In some examples, the controller 18 receives a desired additive manufacturing operation, or sequence of operations, and evaluates the entered operation(s) to determine if the resultant part 16 will be free of flaws. For the purposes of the instant disclosure, free of flaws, or flaw free, refers to a part 16 or workpiece with no flaws causing the part or workpiece to fall outside of predefined flaw tolerance. By way of example, the predefined tolerances can include an amount of unmelt, a surface roughness, or any other measurable property of the part 16. By way of example, factors impacting the output parameters can include material properties, environmental conditions, laser power, laser speed, or any other factors. While described and illustrated herein as a component of a laser powder bed fusion additive manufacturing machine, the software configuration and operations can, in some examples, be embodied as a distinct software program independent of the additive manufacturing machine, or included within any other type of additive manufacturing machine.

A build strategy is parsed and/or specifically prescribed scan vectors are used to create stripe and hatch definitions in each layer of the build. The additive build is simulated layer-by-layer. The output is a map in build parameter space (e.g. laser power, laser speed, layer thickness, etc.). The map is partitioned into different regions reflecting whether flaws are present: lack of fusion, keyholing, the flaw-free "good" zone, etc. A process map is optionally location-specific and dependent upon geometry. If the entirety of a part is in the "good" zone of the process map, it is predicted to be flaw-free.

By using the defined process map, a technician can generate a part 16, or design a sequence of operations to generate a part 16, without requiring substantial empirical prototyping to be performed. This, in turn, allows the part to be designed faster, and with less expense, due to the substantially reduced number of physical iterations performed.

Referring also to Fig. 2, the part 16 is shown as being created by a single laser and multiple lasers. The part 16 shown on the left side of Fig. 2 is laid down by use of a single laser 24. The whole part 16 is assigned to the single laser 24. The part 16 shown to the right side of Fig. 2 is assigned to multiple lasers 24. The multi-laser fusion is configured to increase the rate at which the part 16 can be built. The single laser fusion can have a different set of heat flux, interlayer dwell time, underlying temperature than the multi-laser fusion configuration.

With multi-laser fusion processes the part 16 can be divided into multiple regions 26, such as laser 1 region, laser 2 region and laser 3 region, as shown. Each region 26 can be processed by the different lasers 24. So, each region may have a different set of heat flux, interlayer dwell time, underlying temperature, and the like.

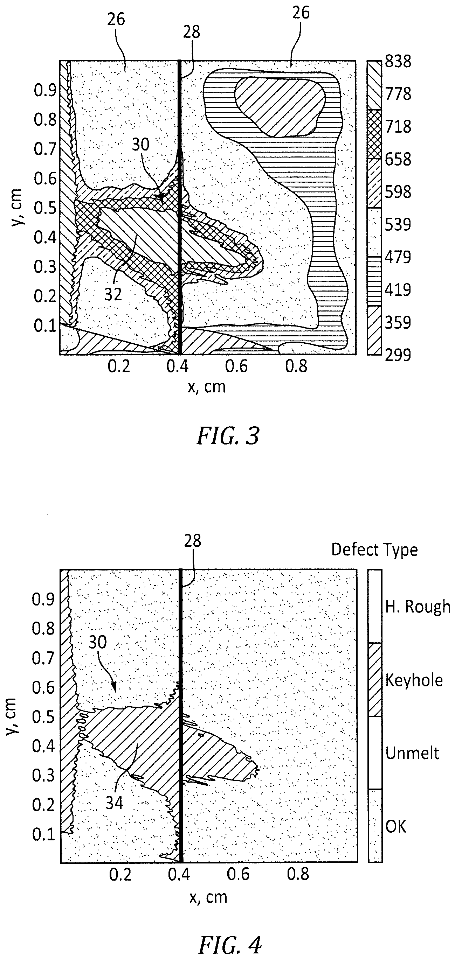

Referring also to Fig. 3 and Fig. 4 showing model predictions for temperature and defect maps for multi-laser applications. The multi-laser arrangement will include laser interface 28 along the common boundaries of the regions 26. It is possible to create a laser interaction zone 30 near these interfaces 28. The lasers 24 can create conditions that cause interaction between the adjoining lasers 24.

As seen in Fig. 3 the laser interaction zone 30 is caused by the two lasers operating simultaneous and contemporaneously adjacent along the laser interface 28 and creating a high thermal region 32 with higher temperature caused by the two lasers 24. The higher temperature profile in the high thermal region 32 can result in increased occurrence of defects 34, such as keyhole porosity as seen in Fig. 4. The laser interaction zone 30 can be conducive to thermal deviation from acceptable temperature ranges for forming the part 16. Also the laser interaction zone 30 can include conditions that negatively impact one or more of the contemporaneous lasers 24 that results in deviation from normal laser application, intensity, location and the like. Spatter or other unwanted particle contamination can influence the quality of the laser 24 within the laser interaction zone 30.

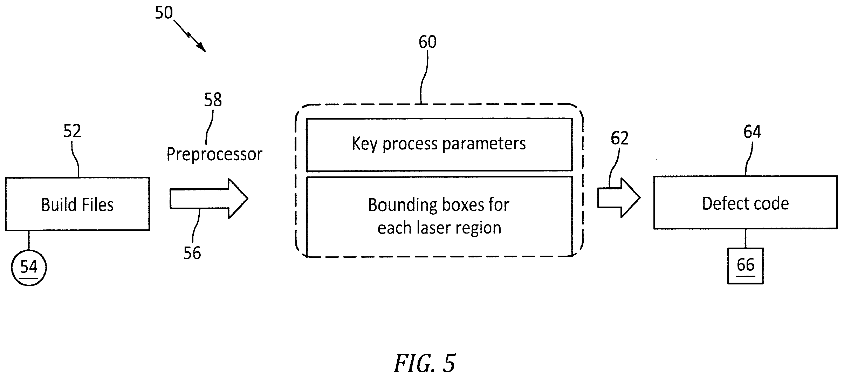

Referring also to Fig. 5, an exemplary analysis tool 50 is shown. The analysis tool 50 includes a build file module 52. The build file module 52 includes a variety of build file inputs 54 that relate to build files of the additive manufacturing machine 10 and the part 16. The inputs 54 to the module 52 can include (1) build conditions including laser overlap; stripe width; angle and overlap; layer thickness; interlayer dwell time and powder particle size; (2) primary process parameters including scan speed, laser power and spot size for each laser; (3) scan region for each laser; and (4) specimen STL or mesh file. In an exemplary embodiment, a user can provide build file inputs 54 directly to the multi-laser defect code module 64.

The build file module 52 provides input parameters 56 through a preprocessor 58 to a prime module 60. The pre-processor 58 includes code to extract key process parameters and laser regions/polygons from a scan strategy build file in the build file module 52, and seamlessly pass this information to the multi-laser defect code module 64 for further defect analysis.

The preprocessor 58 processes the build files 52 to obtain key process parameters and bounding boxes for each laser region. The multi-laser defect code module 64 uses key process parameters and bounding boxes for each laser region 60 to determine location, size and shape of stripes 67, and to perform further defect analysis. Location, size and shape of stripes 67 predicted by defect code module 64 are validated against actual multi-laser build file inputs 54.

The outputs from the defect code module 64 can include (1) temperature map representing local temperature increase as a result of prior layers, stripes and hatching as well as laser thermal interaction; (2) 2D and 3D defect maps representing lack of fusion and keyhole porosities; (3) time-location map representing the location of each laser 24 during the build. The level of thermal interaction between lasers 24 can be significant if the lasers 24 work in proximity of each other. The defect code module 64 operates with an efficient time search algorithm configured to locate the lasers 24 at any specific time during the build.

A defect code module 64 generates a time-location map for lasers 24 using the inputs 54 provided by the user including scan speed, hatch distance and stripe angle. The user can also provide delay time for the lasers 24 if there is a lag between the lasers 24 to start a layer. The defect code module 64 can employ a multi-laser code which uses a global simulation domain rather than a local simulation domain used by the original defect code. The analysis tool 50 operates a multi-laser defect model 66 to produce the necessary output.

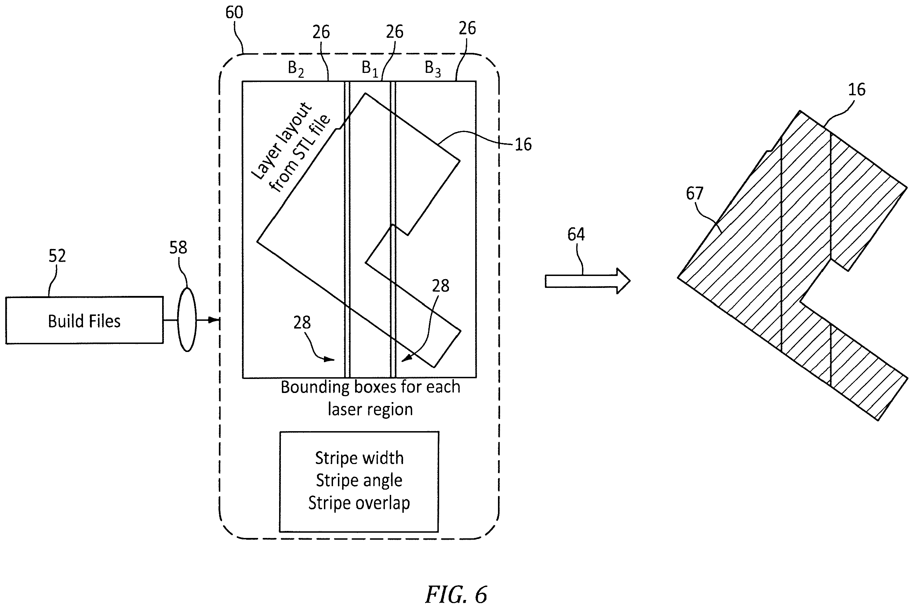

Referring also to Fig. 6, the analysis tool 50 process flow is shown. The diagram shows the use of the build files module 52 for inputs to the preprocessor 58. The preprocessor 58 employes preprocessor code to supply the prime module 60. The defect code module 64 can arrange the layer layout from a standard triangle language (STL) file. Bounding boxes for each region 26 can be arranged as well as stripe width, stripe angle and stripe overlap. The defect code module 64 can employ a defect code to predict the location, size and shape of the stripes 67 from the input parameters, such as the bounding boxes for each laser, stripe width, angle and overlap, height of layer and the like).

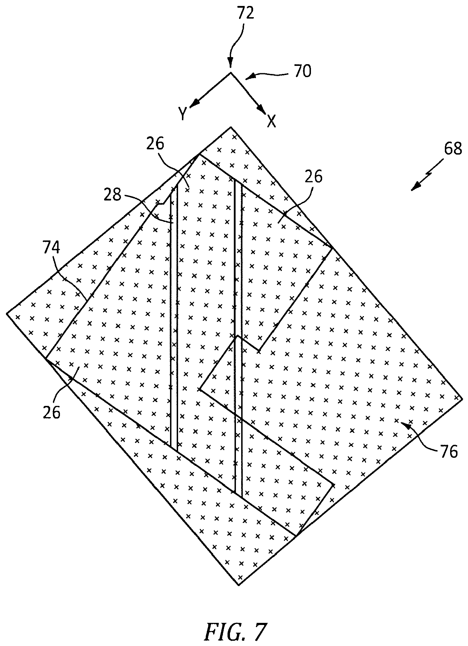

Referring also to Fig. 7, an exemplary global simulation domain 68 is shown. The exemplary global simulation domain 68 can include a coordinate system 70 having axes 72 of the coordinate system 70 are aligned with the hatch vector and stripe edge. The edges of the simulation domain 68 are aligned with the coordinate system axes 72. The simulation domain 68 encompasses the entire layer 74. A structured grid of simulation points 76 are generated inside the domain 68 where temperature and defects are predicted. Masks are generated for each laser region 26 using the part STL file and the bounding boxes from the scan strategy file. These masks are used to identify the simulation points 76 which are located inside each laser region 26. Thermal analysis is performed for each laser region 26 and the results are mapped to the global simulation domain 68.

The outcome results in single maps for temperature and defect as seen in Fig. 3 and Fig. 4. The codes utilized in the analysis tool 50 can expand the effect of previous hatches, stripes and layers on temperature to multi-laser applications. The multi-laser process can produce higher temperatures which results in increased occurrence of keyhole porosity. The analysis tool 50 employs the model to predict the defects in the laser interaction zone 30. The analysis tool 50 can produce a preliminary quality metric as a function of a ratio between a number of points associated with the defects and total number of points.

The analysis tool 50 can produce models for downskin portions of the part 16. The downskin region can be detected in the defect code module 64 based on predetermined Down Facing rules. Machine specific rules can be implemented in the analysis tool 50. Downskin hatch vectors can be parallel to inskin hatch vectors consistent with the scan strategy in the predetermined Down Facing rules.

The analysis tool 50 can employ the defect model to calculate the effect of prior stripes on temperature and predict laser thermal interaction. The analysis tool 50 can employ equations which are developed to calculate the time and location used to predict the temperature increase from laser interaction. The analysis tool 50 can employ an efficient time search algorithm to locate the lasers 24 at any specific time. The analysis tool 50 can enforce the laser thermal interaction by manipulating laser timing and assigning different area sizes to each laser 24. The analysis tool 50 can employ the defect code module 64 to provide the option to use different process parameters for different lasers 24. The parameters include laser power, scan speed and spot size. The analysis tool 50 can predict the effect of location of laser interface 28 on the level of laser thermal interaction and therefore the sensitivity of defect formation to deviation from nominal parameters.

A technical advantage of the disclosed analysis tool can include a system which helps engineers and designers understand and develop multi-laser PBFAM processes to increase rate of production and build large size parts.

Another technical advantage of the disclosed analysis tool can include a fast acting analysis tool which can minimize the costly and time consuming trial and error practices which were used for qualifying additive manufactured parts.

Another technical advantage of the disclosed analysis tool can include the information obtained from this predictive tool can be utilized to additively manufacture high quality parts which in turn minimizes post-build operations in the production process chain.

There has been provided an analysis tool. While the analysis tool has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. An analysis tool for multi-laser additive manufacturing comprising:
a build file module;
a preprocessor in operative communication with the build file module;
a prime module in operative communication with the preprocessor; and
a defect code module in operative communication with the prime module.

2. The analysis tool for additive manufacturing according to claim 1,
wherein the build file module includes a variety of build file inputs that relate to build files of an additive manufacturing machine and a part; and/or
wherein particularly build file inputs are selected from the group consisting of build conditions, primary process parameters, scan region for each laser, and a specimen STL or mesh file.

3. The analysis tool for additive manufacturing according to claim 2,
wherein the build conditions are selected from the group consisting of laser overlap, stripe width, angle and overlap, layer thickness, interlayer dwell time and powder particle size; and/or
wherein the primary process parameters are selected from the group consisting of scan speed, laser power and spot size for each laser.

4. The analysis tool for additive manufacturing according to any of claims 1 to 3,
wherein the pre-processor includes code to extract process parameters and laser regions from a scan strategy build file in the build file module, and seamlessly pass this information to the defect code module for further defect analysis; and/or
wherein the prime module is configured to determine a location, a size and a shape of stripes from input parameters which are validated against an actual multi-laser build file input.

5. The analysis tool for additive manufacturing according to claim 1,
wherein the defect code module is configured to produce outputs selected from the group consisting of a temperature map representing local temperature increase as a result of prior layers, stripes and hatching, laser thermal interaction; two dimension and three dimension defect maps representing a lack of fusion and keyhole porosities; and a time-location map representing the location of each laser during a build.

6. The analysis tool for additive manufacturing according to any of claims 1 to 5,
wherein the defect code module is configured to locate lasers at any specific time during a build; and/or
wherein the defect code module is configured to generate a time-location map for lasers using inputs including scan speed, hatch distance and stripe angle.

7. The analysis tool for additive manufacturing according to any of claims 1 to 6,
wherein the defect code module is configured to employ a defect code to predict the location, size and shape of the stripes from input parameters, such as bounding boxes for each laser, a stripe width, angle and overlap, and a height of layer.

8. The analysis tool for additive manufacturing according to any of claims 1 to 7,
wherein the analysis tool is configured to produce a preliminary quality metric as a function of a ratio between a number of points associated with defects and total number of points: and/or
wherein the analysis tool is configured to employ a time search algorithm to locate lasers at any time.

9. A process for employing an analysis tool for multi-laser additive manufacturing comprising:
configuring a build file module;
operatively connecting a preprocessor with the build file module;
operatively connecting a prime module with the preprocessor; and
operatively connecting a defect code module with the prime module.

10. The process of claim 9,
further comprising configuring the prime module to determine a location, a size and a shape of stripes from input parameters which are validated against an actual multi-laser build file input.

11. The process of claim 9 or 10,
further comprising configuring the defect code module to produce outputs selected from the group consisting of a temperature map representing local temperature increase as a result of prior layers, stripes and hatching, laser thermal interaction; two dimension and three dimension defect maps representing a lack of fusion and keyhole porosities; and a time-location map representing the location of each laser during a build.

12. The process of any of claims 9 to 11,
further comprising configuring the defect code module to locate lasers at any specific time during a build.

13. The process of any of claims 9 to 12,
further comprising configuring the defect code module to generate a time-location map for lasers using inputs including scan speed, hatch distance and stripe angle.

14. The process of any of claims 9 to 13,
further comprising configuring the defect code module to employ a defect code to predict the location, size and shape of the stripes from input parameters, such as bounding boxes for each laser, a stripe width, angle and overlap, and a height of layer.

15. The process of claim 14,
further comprising configuring the analysis tool to produce a preliminary quality metric as a function of a ratio between a number of points associated with defects and total number of points.
